# EUROPEAN PATENT SPECIFICATION

(11) **EP 2 273 296 B1**
(45) Date of publication and mention of the grant of the patent: **05.09.2018**
(21) Application number: 10007126.5
(22) Date of filing: 09.07.2010
(51) Int. Cl.: G02B 6/44

(54) **Optical fibre fanout cable**
Optisches auffächerbares Glasfaserkabel
Câble éclateur de fibres optiques

(30) Priority: 10.07.2009 FR 0903416
(43) Date of publication of application: 12.01.2011
(73) Proprietor: Draka Comteq B.V., 1083 HJ Amsterdam (NL)
(72) Inventor: Bonicel, Jean-Pierre, 92500 Rueil Malmaison (FR); Tranvouez, Nicolas, 92190 Meudon (FR)
(74) Representative: Algemeen Octrooi- en Merkenbureau B.V.

(56) References cited:
- EP-A1- 1 054 279
- WO-A1-2005/114286
- WO-A2-99/13367
- US-A1- 2003 016 925
- US-A1- 2004 114 901
- US-B1- 6 690 862
- "Synthèse de la première phase des travaux d'évaluation et d'expérimentation relatifs à la mutualisation des réseaux en fibre optiques" ARCEP 7 April 2009 (2009-04-07), XP002602470 Retrieved from the Internet: URL:http://www.arcep.fr/uploads/tx_gspubli cation/synt-fibre-thd-150409.pdf [retrieved on 2010-09-28]

## Description

The present invention relates to the field of optical cables, and more specifically, the present invention relates to the field of an optical fibre fanout cable.

The installation of FTTH (Fibre To The Home) in a building, such as for example an appartment complex or an office building, requires a so-called mutualization point to which several service providers (operators) have access. This mutualization point is a point in a building where the connection is made between provider boxes and dwellings within the building. A provider or operator is a company that provides a certain service to a customer or subscriber in return for payment. The mutualization point is generally situated in the basement of the building. For the connection of a dwelling (e.g. an appartment or office) in the building to a certain provider, an optical fibre is routed from the provider's box at the mutualization point to the dwelling in the building. The connection of a subscriber - for example a person or an organization or a company who contracts a provide to receive and pay for a certain service - to a provider is therefore established by means of an optical fibre connected to the subscriber's dwelling (e.g. the appartment where the person lives or the office that the organization or company uses) at one end, and to the provider's box at the mutualization point at its other end.

The development of FTTH is moving towards the routing of several optical fibres to a dwelling in the building, each optical fibre corresponding to one provider. Thus each dwelling in the building receives one optical fibre from each provider, which facilitates the choice of a provider for a resident (person or organization) of the building, and hence contributes to free competition between the providers. If a resident of a certain dwelling wishes to switch from provider A to provider B there is no need to reconnect the optical fiber that has entered the dwelling from the box of provider A to the box of provider B at the mutualization point. On the contrary, there is already an optical fiber from the box of provide B to the dwelling of that resident. Typically the optical fibres that link the boxes of the provides in the mutualization point to a certain dwelling are grouped together in a cable known as a "riser cable" which serves all the floors of the building starting from the mutualization point. On each floor access is made to the riser cable in order to connect each dwelling and hence all residents of that floor to all of the provides having a box at the mutualization point. This is explained in more detail below.

However, the more providers there are serving a certain building and the more dwellings and hence residents on one floor of the building, the more complex the connection of the optical fibres between the providers' boxes at the mutualization point and the dwellings in the building. As the connection of the optical fibres between the dwellings and the providers' boxes is carried out *in situ,* errors in connection between an operator and a resident who is a subscriber may occur. As a result the management of the optical fibres at the mutualization point, or on each landing, requires time and a great deal of care on the part of the installer and the cost may be significant.

Document US-A-5 732 181 describes a cable that comprises a fanout device, i.e. a device separating each individual optical fibre of the cable in simple manner. This makes it possible to facilitate the connection of the optical fibres of the cable to an optoelectronic device. However the document does not describe a cable making it possible to facilitate the connection of an optical fibre between a provider's box at the mutualization point and a dwelling.

Document US-E-RE37028 describes a cable in which the optical fibres are individually protected by a tube over a length of cable, and have connections pre-installed at their ends, thus facilitating the connection of the cable to an optoelectronic device. However the document does not describe a cable making it possible to facilitate the connection of an optical fibre between a provider's box at the mutualization point and a dwelling.

Document WO-A-03/048830 describes a cable that comprises a device separating the individual optical fibres of the cable. The optical fibres are then each protected by a tube, and have connections pre-installed at their ends. The characteristics of the cable make it possible to facilitate the connection of the optical fibres of the cable to an optoelectronic device. However the document does not describe a cable making it possible to facilitate the connection of an optical fibre between a provider's box at the mutualization point and a dwelling.

US-A-2003/0016925 discloses a plurality of fibre optic ribbons and a fanout device arranging the optical fibers in groups. The optical fibres forming a group before the fanout device are different from the optical fibres forming a group after the fanout device.

EP 1 054 279 relates to an access box for one or more optic fibers in a tensioned cable, the box comprising a structural section that integrates the passing cable and having a central connection system area demarcated by two connection bases to which there are connected a plurality of cleaved optic fibers. The connection system area having a plurality of mini-cables providing for the shuffling of the cleaved optic fibers and/or a plurality of branching cables providing for the branch connection of the cleaved optic fibers, wherein the sheath of the cable is axially cut into two half-sheaths as so as to release the optic fibers, and wherein a spacer with two side cavities is provided for the passage of the half-sheaths and a central cavity for the passage of the released optic fibers.

US-A-2004/0114901 discloses optical fibres and a fanout device arranging the optical fibres in groups. The optical fibres forming a group before the fanout device are different from the optical fibres forming a group after the fanout device.

DE-A-102 08 759 discloses optical fibres enclosed in a protective tube and a fanout device arranging the optical fibres in groups.

WO-A-2005/114286 discloses fibre optic input and output ribbons and a fanout device arranging the optical fibres in groups. The optical fibres forming a group before the fanout device are different from the optical fibres forming a group after the fanout device.

US-A-2003/031419 discloses an optical fiber circuit, which reorganizes the order of optical fibres.

WO-A-99/13367 discloses a component for cross-connecting optofibres, which is a fanout device arraning the optical fibres in groups. The optical fibres forming a group before the fanout device are different from the optical fibres forming a group after the fanout device.

US-B-6,690,862 discloses an optical circuit which comprises a fanout device arranging the optical fibres in groups. The optical fibres forming a group before the fanout device are different from the optical fibres forming a group after the fanout device.

A need therefore exists for a cable facilitating the connection of optical fibres between a box at the mutualization point on the one hand and a dwelling in a building on the other hand, without risk of error in the connection of the optical fibres, and having a simplified installation.

To this end, the invention proposes an optical fibre fanout cable comprising:
- a cable portion comprising an outer sheath forming a cavity in which a plurality of cable groups is provided, each cable group in the cable portion comprising a plurality of optical fibres;
- a fanout portion comprising a first fanout device in which the plurality of optical fibres of the cable groups is arranged in fanout groups, wherein the combination of optical fibres forming a fanout group is different from the combination of optical fibres forming a cable group.

In an embodiment, the plurality of groups is loosely provided in the cable portion.

In an embodiment, in the cable portion a lubricant, preferably a solid lubricant, is provided so as to be able to easliy retract a cable group from the plurality of cable groups.

In an embodiment, the cable group comprises optical fibres jointly surrounded by a thin sheath.

In an embodiment, the fanout groups include at least one optical fibre coming from each cable group of the cable portion.

In an embodiment, at least one fanout group of the fanout portion comprises a second fanout device for arranging the optical fibres of said at least one fanout group.

In an embodiment, the optical fibres in at least one, preferably each, fanout group are jointly surrounded by a sheath.

In an embodiment, the sheath extends between the first fanout device and the second fanout device.

In an embodiment, at least one, preferebly each, optical fibre of at least one, preferably each, fanout group comprises a connector at its end.

In an embodiment, wherein the optical fibres comprise a color code and/or a single number depending on their fanout group and/or their cable group.

The present invention relates to the use of the optical fibre fanout cable according the present invention in a building, wherein at least one dwelling is connected at least partly by means of said optical fibre fanout cable to the communication network of one or more service providers.

In an embodiment, the at least one dwelling is connected through a cable group of the cable portion.

In an embodiment, at least one optical fibre of at least one, preferably each, fanout group is connected to a box of a service provider at a mutualization point.

The present invention relates to a method for installing an optical fibre fanout cable according to the present invention comprising:
- connecting at least one of the optical fibres of the fanout portion to boxes at the mutualization point;
- routing of one or more cable groups to one or more floor boxes;
- connecting at least one cable group to a dwelling.

In an embodiment, the method further comprises connecting a drop cable to the cable group and routing the drop cable to the dwelling.

Other characteristics and advantages of the invention will become apparent on reading the following description of the embodiments of the invention, given by way of example and with reference to the attached drawings, which show:
Figure 1, an installation of FTTH optical fibres in a building;
Figure 2, a cross-section of a cable portion according to the invention;
Figure 3, an explanatory diagram of the connection of optical fibres on a landing;
Figure 4, an example of a cable according to the invention;
Figure 5, another example of a cable according to the invention;

An optical fibre fanout cable is proposed. The cable comprises a cable portion comprising an outer sheath forming a cavity in which a plurality of cable groups is provided, each cable group in the cable portion comprises a plurality of optical fibres. The cable also comprises a fanout portion, comprising a first fanout device in which the plurality of optical fibres of the cable groups is arranged in fanout groups. The cable is characterized in that the the combination of optical fibres forming a fanout group is different from the combination of optical fibres forming a cable group.

The fanout device or devices arrange the optical fibres, in a first order in fanout groups in the fanout portion of the cable; and in a second order in groups in the cable portion of the cable. In other words, in a first portion the optical fibres are arranged in a first order, in a second portion the optical fibres are arranged in a second order. Thus an optical fibre can be selected according to two different criteria. Thus the risks of error in the connections of the optical fibres are limited, and the installation of the cable is simplified.

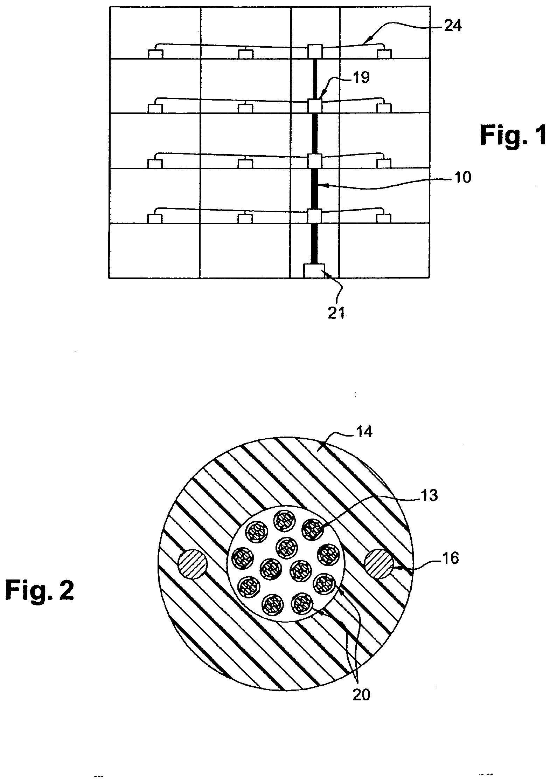

The invention will be better understood with reference to Figures 1 to 5, which show examples of the optical fibre fanout cable 10 or use of the optical fibre fanout cable 10.

According to Figures 2, 4, and 5, the optical fiber fanout cable 10 comprises a portion 14 called a cable portion. This cable portion comprises an outer sheath and optionally two reinforcements 16 which outer sheath forms a cavity in which a plurality of optical fibres 13 are grouped together in a plurality of cable groups 20. Each cable group 20 in the cable portion 14 comprises a plurality of optical fibres 13. The cable portion 14 extends between one end of the optical fibres 13 and a first fanout device 11 (not included in the portion 14).

The optical fiber fanout cable 10 comprises another portion 15 called a fanout portion. The fanout portion 15 comprises at least one fanout device 11, 12 arranging the optical fibres 13 in fanout groups. The optical fibres 13 forming a fanout group are different from the optical fibres 13 forming a cable group 20 in the cable portion 14. In other words, the combination of optical fibres forming a fanout group is different from the combination of optical fibres forming a cable group. The fanout portion 15 extends between the first fanout device 11 and another end 17 of the optical fibres 13.

More particularly, the fanout groups in the fanout portion 15 can comprise at least one optical fibre 13 coming from each cable group 20 in the cable portion 14. Similarly, the cable groups 20 in the cable portion 14 can comprise at least one optical fibre 13 coming from each fanout group in the fanout portion 15. Thus the optical fiber fanout cable 10 makes it possible to integrally connect a series of points upstream of the cable and a series of points downstream of the cable, each upstream point being connected to all of the downstream points, and each downstream point being connected to all of the upstream points.

The optical fibres 13 and the fanout device or devices 11, 12 of the optical fiber fanout cable 10 are pre-assembled in the factory. The optical fiber fanout cable 10 is therefore delivered to the site already provided with optical fibres 13 and fanout devices 11, 12 assembled together. In other words, the fanout device or devices 11, 12 are positioned prior to the delivery and installation of the cable at its place of use. This makes it possible for the installer to avoid having to assemble the fanout devices 11, 12 and the optical fibres 13 at the place of use. As a optical fiber fanout cable 10 can comprise several tens, or even hundreds, of optical fibres, an installer's task will be simplified if the optical fibres 13 are already organized at one end of the optical fiber fanout cable 10 in a first order and at another end of the cable in a second order.

According to Figure 2 which shows a cross-section of the portion 14, the cable portion 14 of the optical fiber fanout cable 10 can comprise one or more reinforcements 16. The reinforcements 16 make it possible to stiffen the optical fiber fanout cable 10 during the installation of the optical fiber fanout cable 10 on a site. This facilitates the installation of the optical fiber fanout cable 10 and protects the optical fibres 13 from possible kinking or bending. The type of reinforcement 16 shown in Figure 2 is given by way of example. Other methods of reinforcing the cable can be used.

In the fanout portion 15 of the optical fiber fanout cable 10, the optical fibres 13 arranged in fanout groups can be handled individually over at least a length extending from their end 17. In other words, the optical fibres 13 are separated from each other over at least a portion of fibre comprising their end 17. Thus each optical fibre 13 can be freely handled by an installer of the optical fiber fanout cable 10.

In the fanout portion 15 of the optical fiber fanout cable 10, the fanout groups can each support at least one second fanout device 12. The second fanout device 12 makes it possible to improve the separation and the identification of the individual optical fibres 13 in each fanout group.

In the fanout portion 15 of the optical fiber fanout cable 10, the distance between the fanout devices 11, 12 and the end 17 of an optical fibre 13 can vary depending on the optical fibre 13. Thus in the optical fiber fanout cable 10 an optical fibre 13 can have a length that depends on how far away the optical fibre 13 is connected. In other words, the optical fiber fanout cable 10 is suited to the specific features of the installation site. As a result the stages of preparation of the optical fiber fanout cable 10 at the installation site are limited, and the installation of the optical fiber fanout cable 10 is simplified. For example, during the connection of mutualization boxes to dwellings by the optical fiber fanout cable 10, the ends 17 of the optical fibres 13 in the fanout portion 15 can be connected to the boxes at the mutualization point. The boxes at the mutualization point can be stacked in a vertical direction. It can be advantageous that the distance between a fanout device 11, 12 and the end 17 of an optical fibre 13, intended to be connected to a box at the mutualization point, increases with the vertical position of the box at the mutualization point corresponding to the optical fibre 13.

In the fanout portion 15 of the optical fiber fanout cable 10, the optical fibres 13 arranged in fanout groups can be individually protected by a protective tube over at least a length extending from their end 17. Thus the optical fibres 13 are protected in the vicinity of their point of connection to a device, such as a box at a mutualization point.

In the fanout portion 15 of the optical fiber fanout cable 10, for each optical fibre 13, the protective tube can have a diameter comprised between 900 µm and 2 mm. Thus the optical fibres 13 can be easily handled and mechanically protected without increasing the space requirement of all of the optical fibres 13. Grouping means can be used to facilitate the grouping of the optical fibres 13.

For example the optical fibres 13 in a cable group 20 in the cable portion 14 can be surrounded by a sheath. The sheath can be a thin sheath. The optical fibres 13 in a cable group 20 in the cable portion 14 can be surrounded by a tie. Alternatively the optical fibres 13 of a cable group 20 in the cable portion 14 can be in ribbon form. Typically a ribbon is made up of parallel optical fibres encapsulated in a common matrix, for example an ultra-violet radiation hardening material.

For example, the optical fibres 13 of a fanout group in the fanout portion 15 can be held together by ties 18, or by a sheath 22. In particular in the case where the fanout portion 15 also comprises second fanout devices 12, for each fanout group in the fanout portion 15, a sheath 22 can extend between the first fanout device 11 and the second fanout device 12 in order to hold the optical fibres 13 together.

In the cable portions 14 and fanout portions 15 of the optical fiber fanout cable 10, the protective tubes and the sheaths 22 can be made of a material that withstands the thermal and mechanical stresses to which the optical fiber fanout cable 10 is subjected. For example the protective tubes and the sheaths 22 can be of the LSZH ("Low Smoke Zero Halogen") type. The protective tubes and the sheaths 22 can also be made of fluorinated resin, or any other material the mechanical and thermal characteristics of which are suitable for use in the optical fiber fanout cable 10.

In the optical fiber fanout cable 10, the optical fibres 13 can have a colour code and/or an unique number as a function of, i.e. depending on, their respective cable group 20 in the cable portion 14 and/or as a function of, i.e. depending on, their respective fanout group in the fanout portion 15. Thus each optical fibre 13 can be individually identified. An installer can easily select an optical fibre 13 as a function of its cable group 20 in the cable portion 14 and/or of its fanout group in the fanout portion 15. The installation of the optical fiber fanout cable 10 is therefore facilitated. For example, the optical fibres 13 can comprise a colour code at their ends. The optical fibres 13 can also be a particular colour, such as red, blue, green or yellow.

The optical fibres 13 can be of the G.657 B type in order to achieve a low radius of curvature, thus the attenuation of the signal in the fibre is not increased. For example, a G.657 B fibre can have a radius of curvature of 7 mm, without the attenuation of the signal in the fibre within a wavelength range of 1275 nm - 1625 nm being significantly affected thereby. However other types of optical fibres 13 can be used in the optical fiber fanout cable 10.

The optical fibres 13 can comprise connectors at their end 17 in order to facilitate their connection to a device, such as a box at a mutualization point. For example, the connectors can be of the SC/UPC ("Standard Connector/Ultra Polish Connector") type. However the optical fibres 13 can be connected by any other means, such as soldering or mechanical splicing. The connectors, or other means of connection, can each have an identification number. This number can make it possible to identify a cable group 20 of the cable portion 14 and /or a fanout group of the fanout portion 15, so that the connection of an optical fibre 13 is facilitated.

The optical fibres 13 of the optical fiber fanout cable 10 can carry a signal from a signal source to a site of use of the signal. For example the signal source can be a box at a mutualization point. The boxes at the mutualization point can each be assigned to service providers such as telephone, Internet access or remote monitoring operators, or others. The optical fibres 13 that start from these boxes at the mutualization point carry a signal specific to the provider to which the box is assigned. For example, the site of use of the signal can be a dwelling in a building. The optical fibres 13 then carry the signal to the dwelling where the signal is utilized. This makes it possible for example to have access to a telephone line, the Internet, video or remote monitoring within the dwellings.

The advantages of the optical fiber fanout cable 10 will be better understood by referring to the application of FTTH ("Fibre To The Home") installation shown in Figure 1. Figure 1 shows a diagram of a building comprising an FTTH cable installation. The mutualization point 21 situated at the basement of the building allows several service providers (operators) access to the building. The optical fibres 13 are grouped together in the optical fiber fanout cable 10 in order to be routed to all the floors of the building from the mutualization point 21. On one floor a certain number of cable groups 20 are extracted from the optical fiber fanout cable 10, depending on the number of providers serving the building and the number of dwellings on the floor. The optical fibres 13 arrive on each landing of the building at a floor box 19, where the optical fibres 13 are connected to fibres of drop cables 24, each drop cable 24 routing its respective fibres to a corresponding dwelling. Although the use of a drop cable 24 is preferred it would also be possible to connect the dwellings directly to optical fibres 13. Figure 1 shows an example of use of the optical fiber fanout cable 10 for a connection between four boxes at a mutualization point, and twelve dwellings. In the example the optical fibres 13 connect each box at the mutualization point to each dwelling, so that each dwelling is provided with a connection to each of the service providers.

In the example shown in Figure 1, the optical fibres 13 are arranged in a first order in the cable portion 14, i.e. as a function of their respective dwelling; the optical fibres 13 are also arranged in a second order in the fanout portion 15, i.e. as a function of their respective box at the mutualization point. Thus an optical fibre 13 can be selected according to two different criteria. In the cable portion 14, the optical fibres 13 corresponding to the same dwelling are grouped together in the same cable group 20 in the cable portion 14. The optical fibres 13 can therefore be routed together to the corresponding dwelling. In the fanout portion 15, the optical fibres 13 corresponding to the same box at the mutualization point are grouped together in the same fanout group of the fanout portion 15. The optical fibres 13 can therefore be routed together to the corresponding mutualisation box. In other words, each cable group 20 in the cable portion 14 corresponds to a respective dwelling, and comprises as many optical fibres 13 as there are mutualization point boxes; the number of cable groups 20 in the cable portion 14 corresponds to the number of dwellings. Each fanout group in the fanout portion 15 corresponds to a respective box at the mutualization point, and each fanout group in the fanout portion 15 comprises as many optical fibres 13 as there are dwellings; the number of fanout groups in the fanout portion 15 corresponds to the number of mutualization point boxes. The optical fiber fanout cable 10 is pre-assembled in the factory. Thus the installer of the optical fiber fanout cable 10 does not organize the optical fibres 13 on the installation site. As a result the risks of optical fibre 13 connection errors are reduced.

Figure 2 shows a cross-section of the portion 14 of the example of the optical fibre fanout cable 10 that can be used in the application described in Figure 1. The cable portion 14 has twelve cable groups 20 of optical fibres 13, each cable group 20 in the cable portion 14 comprising four optical fibres 13. In the cable groups 20 in the cable portion 14, each optical fibre 13 corresponds to a box at the mutualization point. On each floor a cable group 20 in the cable portion 14 comprising four optical fibres 13 is dedicated to one dwelling.

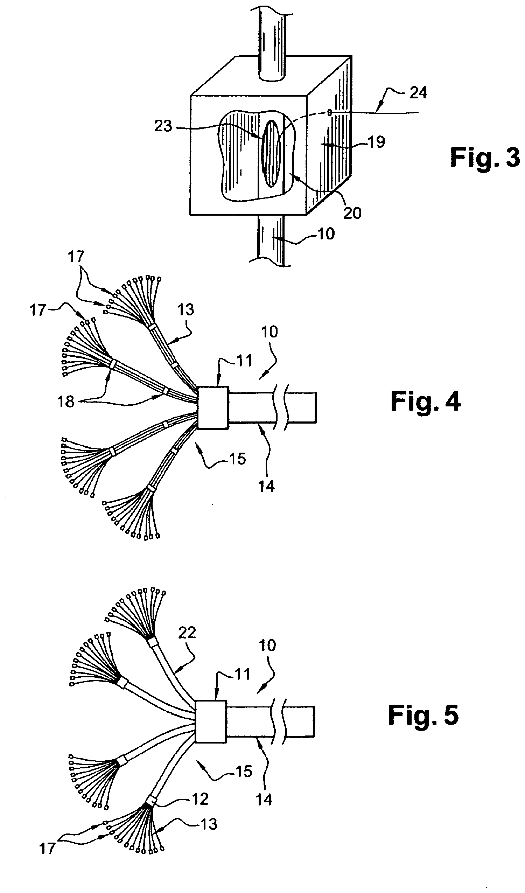

Figure 3 makes it possible to better understand the advantage of the portion 14 of the optical fiber fanout cable 10 in the connection of a dwelling. Typically a window 23 is made in the optical fiber fanout cable 10 at a floor box 19. The cable group 20 in the cable portion 14 corresponding to the dwelling is selected. The cable group 20 of the cable portion 14 can then be divided, the optical fibres 13 of the cable group 20 of the cable portion 14 preferably being connected to the optical fibres of a dwelling drop cable 24. Alternatively, the cable group 20 of the cable portion 14 can be pulled directly to the corresponding dwelling. The pre-assembled optical fiber fanout cable 10 makes it possible to facilitate the connection of the cable to the dwelling as it only remains for the installer to extract one of the cable groups 20 in the cable portion 14 for the dwelling in question, the cable group 20 in the cable portion 14 comprising optical fibres 13 connected to all of the boxes at the mutualization point.

The fanout portion 15 of the optical fiber fanout cable 10 can have one or more fanout devices.

Figure 4 shows an example of the optical fiber fanout cable 10 comprising a single fanout device 11. In the example of the optical fiber fanout cable 10 shown in Figure 4, the optical fibres 13 comprise connectors at their end 17; the optical fibres 13 are individually protected by a protective tube up to the fanout device 11. The arrangement of the optical fibres 13 in fanout groups according to the number of boxes at a mutualization point is completed by the ties 18.

The optical fibres 13 arrive at the fanout device 11 from the portion 14 split into twelve cable groups 20 in the cable portion 14, each cable group 20 corresponding to one dwelling. The fanout device 11 reorganizes the optical fibres 13 of the cable groups 20 of the cable portion 14. The optical fibres 13 leave the fanout device 11 split into four fanout groups, each fanout group corresponding to one box at the mutualization point, and each fanout group comprising one optical fibre 13 for each dwelling. In the example shown in Figure 4, there are therefore twelve optical fibres 13 per fanout group in the fanout portion 15. Thus the portion 15 of the optical fiber fanout cable 10 that can be pre-assembled makes it possible to facilitate the connection of the optical fiber fanout cable 10 to the boxes at the mutualization point, as it only remains for the installer to connect to each of the boxes at the mutualization point the optical fibres 13 already split according to the boxes at the mutualization point. Thus all of the dwellings are easily connected to a box at the mutualization point.

Figure 5 shows the optical fiber fanout cable 10 comprising a plurality of fanout devices 11, 12 that arrange the optical fibres 13 according to the number of boxes at the mutualization point and according to the number of dwellings to be served. In the example shown in Figure 5 the optical fibres 13 comprise connectors at their end 17, and are individually protected by a protective tube up to the second fanout devices 12.

The first fanout device 11 on the one hand, and the second fanout devices 12 on the other hand, are successively positioned along the optical fiber fanout cable 10. By way of example, Figure 5 shows a fanout device 11 and four fanout devices 12. In the example shown in Figure 5, in each fanout group in the fanout portion 15, the optical fibres 13 are held together by a sheath 22 after being arranged by the fanout device 11. The second fanout device 12 makes it possible to improve the separation and identification of the individual optical fibres 13 in a fanout group in the fanout portion 15. Thus the twelve optical fibres 13 in a fanout group are easily handled individually in order to be connected to their respective connection point in their box at a mutualization point.

The distance between the first fanout device 11 and the second fanout devices 12 can be adjusted as a function of the mutualization point used. In particular, the distance between the fanout devices 11, 12 can be adjusted during the assembly of the optical fiber fanout cable 10 in the factory, in order, once again, to simplify the installation of the optical fiber fanout cable 10 at the sites of use. The distance between the fanout devices 11, 12 can be a specification provided during the manufacture of the optical fiber fanout cable 10.

The presence of the first fanout device 11, and possibly of the second fanout devices 12, makes it possible to clearly distinguish between the optical fibres 13 as a function of the different boxes at the mutualization point on a fanout portion 15 of the optical fiber fanout cable 10, and as a function of the dwellings in the building on another portion 14 of the optical fiber fanout cable 10.

With the use of the optical fiber fanout cable 10 in the connection of FTTH fibres the connection of an optical fibre 13 between a box at the mutualization point and a dwelling or a subscriber is simplified. The risks of error in the connection of the optical fibres 13 are reduced, and the optical fiber fanout cable 10 allows simplified installation.

The invention also relates to a method of manufacturing the optical fiber fanout cable 10. The manufacturing method comprises the assembly in the factory of the fanout portion 15 with the cable portion 14. In particular, the manufacturing method comprises the assembly in the factory of the fanout device or devices 11, 12 of the optical fiber fanout cable 10. Thus, it is not necessary to put the fanout device or devices 11, 12 in place on the optical fiber fanout cable 10 during its installation. Specifications relating to the installation site of the optical fiber fanout cable 10 are supplied in the factory in order for the optical fiber fanout cable 10 to be manufactured such that it is directly suitable for use. On leaving the factory, the optical fiber fanout cable 10 is ready to be fitted at the place of use. Characteristics of the optical fiber fanout cable 10, such as the length of the optical fiber fanout cable 10, the lengths of the portions 14, 15 of the optical fibre fanout cable 10, or the number of optical fibres 13 can be determined as a function of the specific features of the installation site of the optical fibre fanout cable 10. In the application example shown in Figure 1, these characteristics can comprise for example the distance between the boxes at the mutualization point and the dwellings, the number of floors in the building, the distance between the basement of the building and the mutualization point, or the number of boxes at the mutualization point, or/and the number of dwellings in the building.

More particularly in the fanout device 11, each cable group 20 in the cable portion 14 is open. The optical fibres 13 are separated and identified in order to be reorganized in fanout groups. In particular in the application example shown in Figure 1, each group in the cable portion 14 corresponding to a dwelling is open. The optical fibres 13 are separated and identified in order to be reorganized as a function of the box at the mutualization point to which they have to be connected.

In the second fanout devices 12, if applicable, the optical fibres 13 coming from the fanout device 11 are separated. The optical fibres 13 are then individually identified and protected by a protective tube. However the optical fibres 13 retain their grouping in each fanout group. Although the optical fibres 13 are individually identified, they are still split into fanout groups.

Thus the manufacturing method makes it possible to organize the optical fibres 13 of the optical fibre fanout cable 10 in a controlled environment, thus limiting the errors of connection that might occur during the installation of the optical fibre fanout cable 10 on site. It can be advantageous to test the prepared optical fibre fanout cable 10 in the factory. The optical fibre fanout cable 10 can also be delivered to site with a test certificate. This test and this test certificate are guarantees of the reliability of the pre-assembled optical fibre fanout cable 10.

The invention also relates to a method of installing the optical fibre fanout cable 10 in an application as described in Figure 1.

The installation method comprises firstly the supply of the optical fibre fanout cable 10. The installer then establishes the connection of the optical fibres 13 to the boxes at the mutualization point, and routes optical fibres 13 to each dwelling.

The present invention moreover relates to an optical fibre fanout cable 10 comprising: * a cable portion 14 in which a plurality of optical fibres 13 are grouped together in a plurality of groups 20 in the cable portion, each group 20 in the cable portion comprising a plurality of optical fibres 13; and * a fanout portion 15, characterized in that the fanout portion 15 comprises at least one fanout device 11, 12 arranging the optical fibres 13 in fanout groups, in which the optical fibres 13 forming a fanout group are different from the optical fibres 13 forming a group 20 in the cable portion 14.

Embodiments of this optical fiber fanout cables 10 are shown hereafter. Each group 20 in the cable portion 14 can be surrounded by a thin sheath. Each group 20 in the cable portion 14 can be a ribbon. Each group 20 in the cable portion 14 can be surrounded by a tie. The fanout groups can include at least one optical fibre 13 coming from each group 20 of the cable portion 14. The optical fibres 13 of each fanout group can be connected to each other by one or more ties 18. The optical fibres 13 in each fanout group can be surrounded by a sheath 22. The sheath 22 can extend between a first fanout device 11 and a second fanout device 12. The optical fibres 13 in the fanout portion 15 can be individually protected by a protective tube from one of their ends 17 up to a fanout device 11, 12. Each protective tube can have a diameter comprised between 900 µm and 2 mm. The optical fibres 13 can comprise a colour code and/or an unique number as a function of their fanout group and/or of their group 20 in the cable portion 14. The optical fibres 13 can comprise connectors at one of their ends 17. The optical fibres 13 can be of G.657B type.

The present invention moreover relates to a method of manufacturing the cable 10 described above, wherein the method comprises the factory assembly of the fanout portion 15 with the cable portion 14. The present invention also relates to a method of installing the cable 10 described above comprising: the supply of the cable 10 described above, the connection of the optical fibres 13 to boxes at a mutualization point, and the routing of the optical fibres 13 to one or more dwellings.

The optical fibre fanout cable 10 according to the present invention is preferably pre-assembled for installation. Thus the installation method according to the invention incurs reduced labour costs. In fact the lengths of the optical fibres 13 are pre-established. The optical fibres 13 are already organized by box at the mutualization point; connectors are possibly already installed. The number of optical fibres 13 and groups 20 in the cable portion 14 are also entirely suited to the requirements. The installers can install the optical fibre fanout cable 10 in simple manner, avoiding the errors of connection of an optical fibre 13 between a box at the mutualization point and a dwelling. There is no comparison between the quality of the pre-assembled, or factory prepared, unit and a traditional solution applied on site. In the factory quality regulations and rigorous tests can be applied, which is very difficult on site.

The installation method will be better understood by referring to Figure 3. On site, on each landing a window 23 is made in the optical fibre fanout cable 10. The cable group 20 in the cable portion 14 corresponding to the dwelling is selected. Then the cable group 20 of the cable portion 14 extracted from the optical fibre fanout cable 10 can be routed directly to the dwelling if the distance separating the point of extraction of the cable group 20 of the cable portion 14 on the landing and the dwelling is short, for example in the order of a few metres.

If the distance between the point of extraction of the cable group 20 of the cable portion 14 on the landing and the dwelling is greater, a floor box 19 can be placed on the landing. The optical fibres 13 contained in the extracted cable group 20 of the cable portion 14 are then connected to the fibres of the dwelling drop cable 24. The installation can be assisted by colour codes. As the colour codes of the optical fibres 13 contained in the cable group 20 of the cable portion 14 and those contained in the dwelling drop cable 24 are identical, the installer cannot make a mistake.

In the floor box 19, the optical fibres 13 of the same cable group 20 of the cable portion 14 and the optical fibres of the same drop cable 24 can be managed in a dedicated cassette. Thus the operations of initial commissioning and subsequent maintenance throughout the whole life of the network (30 or 40 years) are greatly facilitated.

If the distances between landings are accurately known, it is possible to prepare directly in the factory the extraction of the groups 20 of the cable portion 14 through windows 23 made in the optical fibre fanout cable 10. However, this operation can also be carried out in situ as the definition of the windows 23 largely depends on the final path of the optical fibre fanout cable 10 in its vertical routing.

Of course, the present invention is not limited to the embodiments described by way of example. The cable and the manufacturing and installation methods have been described for the connection of a dwelling, but can also be applied to the connection of a subscriber or provider's client, etc.

The cable has been described for connecting four boxes at a mutualization point with twelve dwellings. However the numbers of boxes at a mutualization point and dwellings are not limitative. The cable according to the present invention can also be used in vertical and/or horizontal connections.

The optical fibre fanout cable is not limited to the examples shown in the drawings. More embodiments of the present optical fibre fanout cable are disclosed in the claims.

## Claims

1. Optical fibre fanout cable (10) comprising:
- a cable portion comprising an outer sheath forming a cavity in which a plurality of cable groups (20) is provided, each cable group (20) in the cable portion comprising a plurality of optical fibres (13), jointly surrounded by a thin sheath (22),
- a fanout portion (15) comprising a first fanout device (11) in which the plurality of optical fibres (13) of the cable groups (20) is arranged in fanout groups, wherein the combination of optical fibres(13) forming a fanout group is different from the combination of optical fibres forming a cable group (20), wherein the optical fibres (13) in at least one, preferably each, fanout group are jointly surrounded by a sheath (22),
**characterised in that** said fanout portion (15) extends between said first fanout device and an end (17) of the optical fibres (13).

2. Optical fibre fanout cable (10) according to claim 1 wherein in the cable portion the plurality of groups is loosely provided.

3. Optical fibre fanout cable (10) according one or more of the preceding claims 1-2 wherein in the cable portion a lubricant, preferably a solid lubricant, is provided so as to be able to easily retract a cable group (20) from the plurality of cable groups (20).

4. Optical fibre fanout cable (10) according one or more of the preceding claims 1-3 wherein the fanout groups include at least one optical fibre (13) coming from each cable group (20) of the cable portion.

5. Optical fibre fanout cable (10) according one or more of the preceding claims 1-4 wherein at least one fanout group of the fanout portion (15) comprises a second fanout device (12) for arranging the optical fibres (13) of said at least one fanout group.

6. Optical fibre fanout cable (10) according to claim 5, in which the sheath (22) extends between the first fanout device (11) and the second fanout device (12).

7. Optical fibre fanout cable (10) according one or more of the preceding claims 1-6 wherein at least one, preferably each, optical fibre (13) of at least one, preferably each, fanout group comprises a connector at its end (17).

8. Optical fibre fanout cable (10) according one or more of the preceding claims 1-7, wherein the optical fibres (13) comprise a color code and/or a single number depending on their fanout group and/or their cable group (20).

9. Use of the optical fibre fanout cable (10) according to any one or more of the preceding claims 1-8 in a building, wherein at least one dwelling is connected at least partly by means of said optical fibre fanout cable (10) to the communication network of one or more service providers.

10. The use according to claim 9, wherein the at least one dwelling is connected through a cable group (20) of the cable portion.

11. The use according to one or more of preceding claims 9-10 wherein at least one optical fibre of at least one, preferably each, fanout group is connected to a box of a service provider at a mutualization point (21).

12. A method for installing an optical fibre fanout cable (10) according to any one or more of preceding claims 1-8 comprising:
- connecting at least one of the optical fibres (13) of the fanout portion to boxes at the mutualization point (21);
- routing of one or more cable groups (20) to one or more floor boxes (19)
- connecting at least one cable group to a dwelling.

13. The method of claim 12 further comprising connecting a drop cable (24) to the cable group and routing the drop cable (24) to the dwelling.

## Patentansprüche

1. Optisches Lichtleitfaser-Verzweigungs-Kabel (10), umfassend:
- einen Kabelabschnitt, der einen äußeren Mantel umfasst, der einen Hohlraum bildet, in dem eine Mehrzahl von Kabelgruppen (20) vorgesehen ist, wobei jede Kabelgruppe (20) in dem Kabelabschnitt eine Mehrzahl von optischen Fasern (13) umfasst, die gemeinsam von einem dünnen Mantel (22) umgeben sind;
- einen Verzweigungs-Abschnitt (15), der eine erste Verzweigungs-Vorrichtung (11) umfasst, in der die Mehrzahl von optischen Fasern (13) der Kabelgruppen (20) in Verzweigungs-Gruppen angeordnet ist,
wobei die Kombination von optischen Fasern (13), die eine Verzweigungs-Gruppe bilden, von der Kombination von optischen Fasern verschieden ist, die eine Kabelgruppe (20) bilden,
wobei die optischen Fasern (13) in mindestens einer, vorzugsweise jeder, Verzweigungs-Gruppe gemeinsam von einem Mantel (22) umgeben sind, **dadurch gekennzeichnet, dass** der Verzweigungs-Abschnitt (15) sich zwischen der ersten Verzweigungs-Vorrichtung und einem Ende (17) der optischen Fasern (13) erstreckt.

2. Optisches Lichtleitfaser-Verzweigungs-Kabel (10) nach Anspruch 1, wobei in dem Kabelabschnitt die Mehrzahl von Gruppen lose vorgesehen ist.

3. Optisches Lichtleitfaser-Verzweigungs-Kabel (10) nach einem oder mehreren der vorhergehenden Ansprüche 1 bis 2, wobei in dem Kabelabschnitt ein Schmiermittel, vorzugsweise ein Festschmierstoff, vorgesehen ist, um eine Kabelgruppe (20) leicht aus der Mehrzahl von Kabelgruppen (20) zurückzuziehen.

4. Optisches Lichtleitfaser-Verzweigungs-Kabel (10) nach einem oder mehreren der vorhergehenden Ansprüche 1 bis 3, wobei die Verzweigungs-Gruppen mindestens eine optische Faser (13) umfassen, die von jeder Kabelgruppe (20) des Kabelabschnitts kommt.

5. Optisches Lichtleitfaser-Verzweigungs-Kabel (10) nach einem oder mehreren der vorhergehenden Ansprüche 1 bis 4, wobei mindestens eine Verzweigungs-Gruppe des Verzweigungs-Abschnitts (15) eine zweite Verzweigungs-Vorrichtung (12) zum Anordnen der optischen Fasern (13) von der mindestens einen Verzweigungs-Gruppe umfasst.

6. Optisches Lichtleitfaser-Verzweigungs-Kabel (10) nach Anspruch 5, bei dem sich der Mantel (22) zwischen der ersten Verzweigungs-Vorrichtung (11) und der zweiten Verzweigungs-Vorrichtung (12) erstreckt.

7. Optisches Lichtleitfaser-Verzweigungs-Kabel (10) nach einem oder mehreren der vorhergehenden Ansprüche 1 bis 6, wobei mindestens eine, vorzugsweise jede optische Faser (13) von mindestens einer, vorzugsweise jeder, Verzweigungs-Gruppe einen Verbinder (17) an ihrem Ende aufweist.

8. Optisches Lichtleitfaser-Verzweigungs-Kabel (10) nach einem oder mehreren der vorhergehenden Ansprüche 1 bis 7, wobei die optischen Fasern (13) einen Farbcode und / oder eine einzelne Zahl anhängig von ihrer Verzweigungs-Gruppe und / oder ihrer Kabelgruppe (20) umfassen.

9. Verwendung des optischen Lichtleitfaser-Verzweigungs-Kabels (10) nach einem oder mehreren der vorhergehenden Ansprüche 1 bis 8 in einem Gebäude, wobei zumindest eine Wohnung zumindest teilweise mittels des optischen Lichtleitfaser-Verzweigungs-Kabels (10) an das Kommunikationsnetz eines oder mehrerer Dienstanbieter/s angebunden ist.

10. Verwendung nach Anspruch 9, wobei die mindestens eine Wohnung durch eine Kabelgruppe (20) des Kabelabschnitts verbunden ist.

11. Verwendung nach einem oder mehreren der vorhergehenden Ansprüche 9 bis 10, wobei mindestens eine optische Faser von mindestens einer, vorzugsweise jeder, Verzweigungs-Gruppe mit einer Box eines Dienstanbieters an einem Mutualisierungs-Punkt (21) verbunden ist.

12. Verfahren zum Installieren eines optischen Lichtleitfaser-Verzweigungs-Kabels (10) nach einem oder mehreren der vorhergehenden Ansprüche 1 bis 8, umfassend:
- Verbinden mindestens einer der optischen Fasern (13) des Verzweigungs-Abschnitts mit Boxen an dem Mutualisierungs-Punkt (21);
- Verlegen einer oder mehrerer Kabelgruppen (20) zu einer oder mehreren Bodenbox/en (19);
- Verbinden von mindestens einer Kabelgruppe mit einer Wohnung.

13. Verfahren nach Anspruch 12, ferner umfassend das Verbinden eines Verbindungskabels (24) mit der Kabelgruppe und das Verlegen des Verbindungskabels (24) zu der Wohnung.

## Revendications

1. Câble épanouisseur de fibres optiques (10) comprenant :
- une partie de câble comprenant une gaine extérieure formant une cavité dans laquelle une pluralité de groupes de câbles (20) est fournie, chaque groupe de câbles (20) dans la partie de câble comprenant une pluralité de fibres optiques (13), entourées ensemble par une gaine mince (22),
- une partie d'épanouisseur (15) comprenant un premier dispositif épanouisseur (11) dans lequel la pluralité de fibres optiques (13) des groupes de câbles (20) est agencée en groupes épanouisseurs,
où la combinaison de fibres optiques (13) formant un groupe épanouisseur est différente de la combinaison de fibres optiques formant un groupe de câbles (20), où les fibres optiques (13) dans au moins l'un, de préférence chacun, des groupes épanouisseurs sont entourées ensemble par une gaine (22),
**caractérisé en ce que** ladite partie d'épanouisseur (15) s'étend entre ledit premier dispositif épanouisseur et une extrémité (17) des fibres optiques (13).

2. Câble épanouisseur de fibres optiques (10) selon la revendication 1, dans lequel, dans la partie de câble, la pluralité de groupes est fournie de manière non serrée.

3. Câble épanouisseur de fibres optiques (10) selon l'une ou plusieurs des revendications précédentes 1 et 2, dans lequel, dans la partie de câble, un lubrifiant, de préférence un lubrifiant solide, est fourni de manière à être capable de rétracter facilement un groupe de câbles (20) à partir de la pluralité de groupes de câbles (20).

4. Câble épanouisseur de fibres optiques (10) selon l'une ou plusieurs des revendications précédentes 1 à 3, dans lequel les groupes épanouisseurs comportent au moins une fibre optique (13) provenant de chaque groupe de câbles (20) de la partie de câble.

5. Câble épanouisseur de fibres optiques (10) selon l'une ou plusieurs des revendications précédentes 1 à 4, dans lequel au moins un groupe épanouisseur de la partie d'épanouisseur (15) comprend un deuxième dispositif épanouisseur (12) pour agencer les fibres optiques (13) dudit au moins un groupe épanouisseur.

6. Câble épanouisseur de fibres optiques (10) selon la revendication 5, dans lequel la gaine (22) s'étend entre le premier dispositif épanouisseur (11) et le deuxième dispositif épanouisseur (12).

7. Câble épanouisseur de fibres optiques (10) selon l'une ou plusieurs des revendications précédentes 1 à 6, dans lequel au moins l'une, de préférence chacune, des fibres optiques (13) d'au moins l'un, de préférence chacun, des groupes épanouisseurs, comprend un connecteur à son extrémité (17).

8. Câble épanouisseur de fibres optiques (10) selon l'une ou plusieurs des revendications précédentes 1 à 7, dans lequel les fibres optiques (13) comprennent un code de couleur et / ou un numéro unique en fonction de leur groupe épanouisseur et/ou de leur groupe de câbles (20).

9. Utilisation du câble épanouisseur de fibres optiques (10) selon l'une quelconque ou plusieurs des revendications précédentes 1 à 8 dans un bâtiment, où au moins un logement est connecté au moins partiellement au moyen dudit câble épanouisseur de fibres optiques (10) au réseau de communication d'un ou de plusieurs fournisseur(s) de services.

10. Utilisation selon la revendication 9, dans laquelle l'au moins un logement est connecté par l'intermédiaire d'un groupe de câbles (20) de la partie de câble.

11. Utilisation selon l'une ou plusieurs des revendications précédentes 9 et 10, dans laquelle au moins une fibre optique d'au moins l'un, de préférence chacun, des groupes épanouisseurs, est connectée à un boîtier d'un fournisseur de services au niveau d'un point de mutualisation (21)

12. Procédé d'installation d'un câble épanouisseur de fibres optiques (10) selon l'une quelconque ou plusieurs des revendications précédentes 1 à 8, comprenant le fait :
- de connecter au moins l'une des fibres optiques (13) de la partie d'épanouisseur à des boîtiers au niveau du point de mutualisation (21) ;
- d'acheminer un ou plusieurs groupe(s) de câbles (20) vers un ou plusieurs boîtier(s) d'étages (19),
- de connecter au moins un groupe de câbles à un logement.

13. Procédé de la revendication 12, comprenant en outre le fait de connecter un câble de dérivation (24) au groupe de câbles et d'acheminer le câble de dérivation (24) vers le logement.
